(19) Europäisches Patentamt
European Patent Office
Office européen des brevets

(11) EP 0 476 692 B1

(12) **EUROPEAN PATENT SPECIFICATION**

(45) Date of publication and mention
of the grant of the patent:
**11.12.1996 Bulletin 1996/50**

(51) Int Cl.6: **G01W 1/17**

(21) Application number: **91116043.0**

(22) Date of filing: **20.09.1991**

(54) **Method and apparatus for calculating predicted mean thermal sensitivity**

Verfahren und Vorrichtung zum Berechnen der vorhergesagten mittleren thermischen Sensibilität

Méthode et appareil pour calculer la sensibilité thermique moyenne prédite

(84) Designated Contracting States:
**DE DK FR GB**

(30) Priority: **21.09.1990 JP 250008/90**

(43) Date of publication of application:
**25.03.1992 Bulletin 1992/13**

(73) Proprietor: **YAMATAKE-HONEYWELL CO. LTD.
Tokyo 150 (JP)**

(72) Inventor: **Kon, Akihiko, c/o Fujisawa Factory
Fujisawa-shi, Kanagawa (JP)**

(74) Representative: **Kahler, Kurt, Dipl.-Ing.
Patentanwälte Kahler, Käck, Fiener & Sturm
P.O. Box 12 49
87712 Mindelheim (DE)**

(56) References cited:
**EP-A- 0 214 294        EP-A- 0 279 865
EP-A- 0 495 117        DE-U- 8 908 474
FR-A- 2 231 018        FR-A- 2 325 915
US-A- 4 125 012        US-A- 4 504 157**

**Description**

Background of Invention

The present invention relates to a method and an apparatus for calculating a PMV (Predicted Mean Vote) value as predicted mean thermal sensitivity representing the degree of comfort in an indoor environment.

In a conventional apparatus, as a formula for calculating a PMV value as predicted mean thermal sensitivity, the PMV equation defined by ISO 7730, i.e., the following equation (1), has been employed:

$$PMV = (0.303e^{-0.036M} + 0.028) \times [(M - W') -$$

$$3.05 \times 10^{-3} \cdot \{5733 - 6.99(M - W') - Pa\} -$$

$$0.42\{(M - W') - 58.15\} - 1.7 \times 10^{-5} \cdot M \cdot (5867 - Pa) - 0.0014 \cdot M \cdot (34 -$$

$$Ta) - 3.96 \cdot 10^{-8} \cdot fc\ell \cdot \{Tc\ell + 274)^4 - (Tr + 273)^4\} - fc\ell \cdot hc \cdot (Tc\ell - Ta)] \qquad (1)$$

for

$$Tc\ell = Tsk - 0.155 \cdot Ic\ell \cdot [3.96 \times 10^{-8} \cdot fc\ell \cdot \{Tc\ell +$$

$$274)^4 - (Tr + 273)^4\} + fc\ell \cdot hc \cdot (Tc\ell -$$

$$Ta)]$$

$$hc = \begin{cases} 2.38(Tc\ell - Ta)^{0.25} \\ \quad for\ 2.38(Tc\ell - Ta)^{0.25} > 12.1\sqrt{Vair} \\ 12.1\sqrt{Vair} \\ \quad for\ 2.38(Tc\ell - Ta)^{0.25} \leq 12.1Vair \end{cases}$$

| | |
|---|---|
| $Tc\ell$ | = clothing surface temperature |
| Tsk | = skin temperature |
| Pa | = RH·Pa* |
| RH | = humidity |
| Pa* | = saturated water vapor pressure |
| M | = activity amount |
| W' | = work amount |
| Ta | = air temperature |
| Tr | = radiant temperature |
| $Ic\ell$ | = clothing thermal resistance |
| Vair | = air velocity |
| $fc\ell$ | = factor |

Such a conventional PMV equation, however, is a collection of large number of terms, and has a very complicated formation, e.g., biquadractic terms of $Tc\ell$ and Tr and repetitive calculations of $Tc\ell$.

For this reason, in the conventional method, complicated arithmetic processing is required, and hence the processing time is undesirably prolonged. Moreover, the cost of the PMV calculating apparatus is inevitably increased, thus posing some practical difficulties in the use of such a PMV calculating apparatus as a PMV sensor for building air-conditioning.

For example, EP-A-0 495 117, reflecting a state of the art according to Article 51(3) EPC, describes a method and an apparatus for calculating thermal sensitivity in which thermal energy is supplied to a heater so as to keep a temperature of a sensor provided for the heater at a predetermined set temperature. The thermal sensitivity is calculated on the basis of an air temperature, a clothing thermal resistance, the predetermined set temperature and the thermal energy. In order to keep the temperature of the sensor at the predetermined value, a controller etc. have to be provided.

Summary of the Invention

It is an object of the invention to provide a method of calculating predicted mean thermal sensitivity, in which arithmetic processing and the measurement of the physical quantities on which this arithmetic processing is based can be simplified.

It is a further object of the invention to provide an apparatus for calculating predicted mean thermal sensivity, which has a simple construction.

These objects are solved by the features described in claim 1 and claim 2, respectively.

According to the present invention, by obtaining the operative temperature $T_0^*$ close to the operative temperature $T_0$, the arithmetic processing for the operative temperature $T_0$ can be simplified.

Brief Description of the Drawings

Fig. 1(a) is a block diagram showing a predicted mean thermal sensitivity calculating apparatus according to an embodiment of the first aspect of the present invention;

Fig. 1(b) is a block diagram showing a predicted mean thermal sensitivity calculating apparatus according to an embodiment of the second aspect of the present invention;

Figs. 2(a) and 2(b) are views showing a module for an environment measuring unit used for the predicted mean thermal sensitivity calculating apparatus of the present invention;

Fig. 3 is a circuit diagram showing an air velocity measuring circuit in the environment measuring unit;

Figs. 4(a) and 4(b) are views showing the overall arrangement of the environment measuring unit;

Fig. 5 is a view showing the process of calculating predicted mean thermal sensitivity PMV* in the predicted mean thermal sensitivity calculating apparatus shown in Fig. 1(b) in which the surface of a module main body 5-11 is colored to be sensitive to a radiant temperature Tr so that the emissivity is increased; and

Figs. 6(a) to 6(c) are cross-sectional views respectively showing modifications of a module main body used for the environment measuring unit.

Description of the Preferred Embodiments

A predicted mean thermal sensitivity calculating apparatus according to the present invention will be described in detail below.

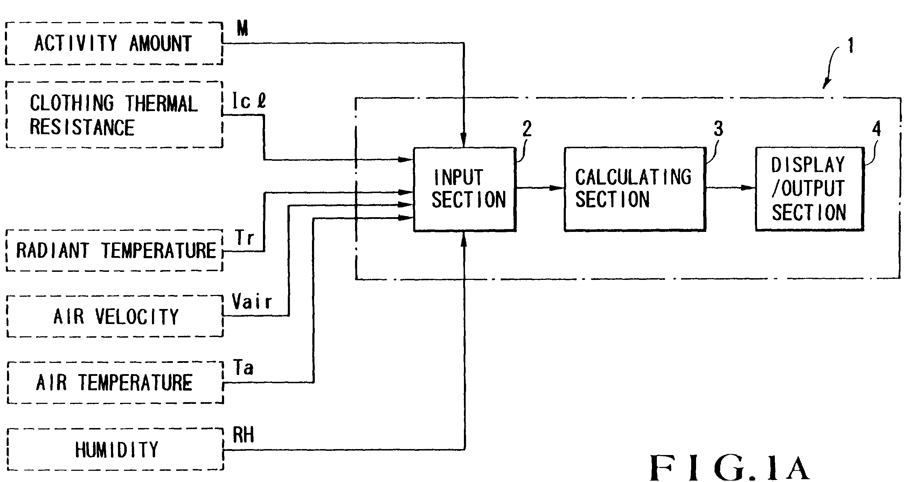

Fig. 1(a) shows an embodiment of this predicted mean thermal sensitivity calculating apparatus, which corresponds to the first aspect of the present invention.

A predicted mean thermal sensitivity calculating apparatus 1 comprises an input section 2, a calculating section 3, and a display/output section 4. An activity amount M and a clothing thermal resistance $Ic\ell$ are supplied, as set values, to the input section 2. In addition, a radiant temperature Tr, an air velocity Vair, an air temperature Ta, and a relative humidity RH are supplied, as detection values, to the input section 2. These set and detection values are supplied from the input section 2 to the calculating section 3. Subsequently, the calculating section 3 performs arithmetic processing as a characteristic feature of the present invention on the basis of a PMV* equation using an operative temperature $T_0$.

More specifically, the operative temperature $T_0$ for a human body is calculated first by the following equation (2) on the basis of the radiant temperature Tr, the air temperature Ta, the air velocity Vair, coefficients $b_1$ and $b_2$, and a coefficient $\underline{n}$. Predicted mean thermal sensitivity PMV* is calculated by the following equation (3) on the basis of the calculated operative temperature $T_0$, the air temperature Ta, a relative humidity RH, a saturated water vapor pressure Pa*, the clothing thermal resistance $Ic\ell$, a variable $h_0$ ($h_0 = b_1 + b_2 \cdot Vair^n$), and coefficients $a_1$ to $a_6$.

$$T_0 = \frac{b_1 \cdot Tr + b_2 \cdot Vair^n \cdot Ta}{b_1 + b_2 \cdot Vair^n} \tag{2}$$

$$PMV^* = a_1 + a_2 \cdot Ta + a_3 \cdot RH \cdot Pa^*$$

$$- \frac{a_4 \cdot h_0}{1 + a_5 \cdot Ic\ell \cdot h_0} \cdot (a_6 - T_0) \qquad (3)$$

Equation (3) including equation (2) is obtained by the present applicant by trial and error to simplify the conventional PMV equation (equation (1)). The PMV* value obtained by this equation coincides with the PMV value obtained by the conventional PMV equation with considerably high accuracy. Table 1 shows the comparison between PMV and PMV* in the presence of air in a summertime under the following conditions: $Ic\ell = 0.5$, RH = 50%, Ta = Tr = 30°C, and Vair = 0.2 m/s. Table 2 shows the comparison between PMV and PMV* in the presence of air in a summertime under the following conditions: $Ic\ell = 0.5$, RH = 50%, Ta = Tr = 30°C, and Vair = 0.4 m/s. It is apparent from these tables that PMV and PMV* coincide with each other with only a small error.

Table 1

| Data associated with PMV | | Data associated with PMV* | |
|---|---|---|---|
| PMV | 1.4977 | PMV* | 1.4767 |
| LOAD | 28.3663 | LOAD* | 28.3992 |
| R + C | 22.0470 | R* + C* | 22.6971 |

Table 2

| Data associated with PMV | | Data associated with PMV* | |
|---|---|---|---|
| PMV | 1.3671 | PMV* | 1.2251 |
| LOAD | 25.8998 | LOAD* | 24.1467 |
| R + C | 24.5231 | R* + C* | 26.9492 |

Note that the PMV* value obtained by the calculating section 3 is supplied to the display/output section 4 to be displayed.

In the above tables, "LOAD" indicates a collective portion in equation (1) expressed as PMV = $(0.303e^{-0.036M} + 0.028)$ x LOAD, and "LOAD*" corresponds to "LOAD" for PMV*. In addition, in R + C = $3.96 \cdot 10^{-8} \cdot fc\ell \cdot \{Tc\ell + 274)^4 - (Tr + 273)^4\} - fc\ell \cdot hc \cdot (Tc\ell - Ta)$, "R* + C*" corresponds to "R + C" for PMV*. "R* + C*" is proportional to $[a_4/(1 + a_5 \cdot Ic\ell)] \cdot (a_6 - Teq)$.

As described above, according to the predicted mean thermal sensitivity calculating apparatus of this embodiment, the predicted mean thermal sensitivity PMV* can be calculated by four simple arithmetic operations without degrading the accuracy, thus greatly shortening the processing time as compared with the conventional apparatus. In addition, since only four simple arithmetic operations are required, the calculating section 3 can be constituted by simply incorporating an analog circuit mainly consisting of an operational amplifier or only one microcomputer. This promotes a reduction in cost of the apparatus and hence greatly contributes to a practical application of the apparatus as a PMV sensor for building air-conditioning.

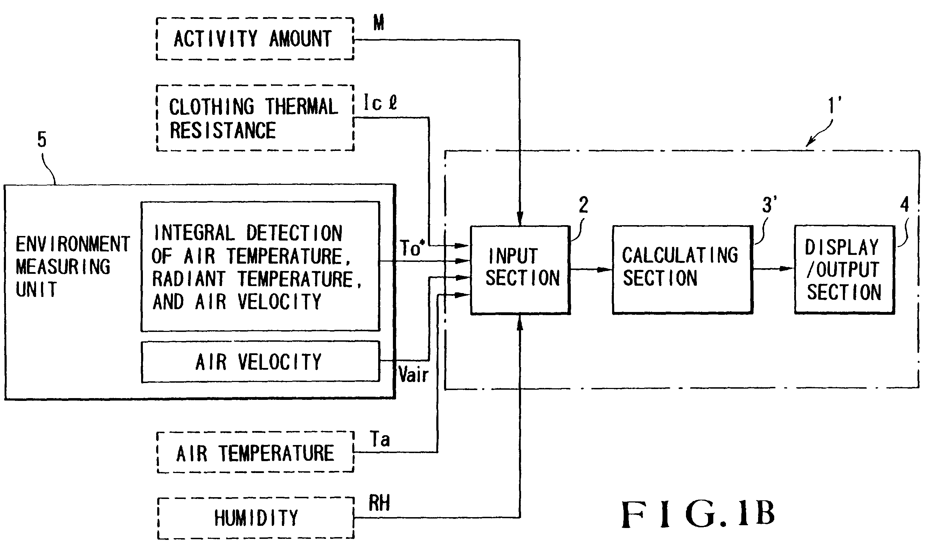

Fig. 1(b) shows another embodiment of the present invention, which corresponds to the second aspect of the present invention. In this embodiment, an environment measuring unit 5 is arranged in a room to obtain an operative temperature $T_0^*$ and an air velocity Vair, and these values are supplied to an input section 2 together with an activity amount M, a clothing thermal resistance $Ic\ell$, an air temperature Ta, and a relative humidity RH.

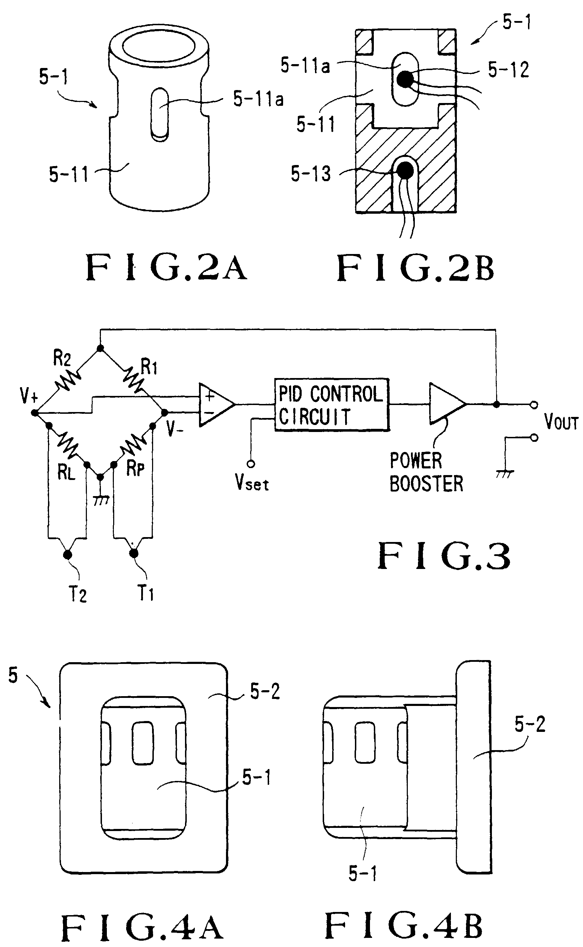

Figs. 2(a) and 2(b) show an example of the environment measuring unit 5. Fig. 2(a) is a perspective front view of a module 5-1 constituting the environment measuring unit 5. Fig. 2(b) is a cross-sectional view of the module 5-1. The module 5-1 comprises a module main body 5-11 constituted by a cylindrical metal member having a bottom, a thermal sensor 5-12 for measuring the air velocity Vair, and a thermal sensor 5-13 for measuring the operative temperature $T_0^*$. The module main body 5-11 has a plurality of elongated holes 5-11a through which air flows. The thermal sensor 5-12 is arranged in substantially the center of the internal space of the module main body 5-11, while the thermal sensor 5-13 is embedded in the bottom of the module main body 5-11. If this module 5-1 is arranged in a room, the operative temperature $T_0^*$ for the environment measuring unit 5 represented by the following equation (4) having a coefficient $b_3$ can be obtained through the thermal sensor 5-13. Note that the coefficients $b_1$ and $b_3$ of the environment measuring unit 5 are determined in advance by experiments or the like.

$$T_0{}^* = \frac{b_1 \cdot Tr + b_3 \cdot Vair^n \cdot Ta}{b_1 + b_3 \cdot Vair^n} \qquad (4)$$

In addition, the air velocity Vair can be obtained through the thermal sensor 5-12. In this embodiment, the air velocity Vair is obtained by an air velocity measuring circuit shown in Fig. 3. More specifically, the thermal sensor 5-12 is constituted by a first thermistor $T_1$ and a second thermistor $T_2$. The thermistor $T_1$ is heated to T°C, and an air temperature Ta is measured by the thermistor $T_2$. By controlling $\Delta T = T - Ta$ to be constant, i.e., using an air velocity measuring method based on a constant temperature difference, an output $V_{OUT}$ corresponding to the air velocity Vair is obtained. That is, if the energy consumption of the thermistor $T_1$ is represented by P(W), then,

$$P(W) = K \cdot V_{OUT}{}^2 = (A + B \cdot Vair^n) \cdot \Delta T$$

Therefore, the output $V_{OUT}$ is given by

$$V_{OUT} = f(Vair, \Delta T)$$

$$= \sqrt{\left(A + B \cdot Vair^n\right) \cdot \Delta T / K}$$

If this output $V_{OUT}$ is corrected to establish

$$Vair^n = (V_{OUT}{}^2 \cdot K / \Delta T - A)/B$$

then, the air velocity Vair can be obtained.

Figs. 4(a) and 4(b) show the overall arrangement of the environment measuring unit 5 constituted by the module 5-1 shown in Figs. 2(a) and 2(b). Fig. 4(a) is a front view of the unit 5. Fig. 4(b) is a side view of the unit 5. In this environment measuring unit 5, an electrical circuit for measuring the air velocity Vair and the operative temperature $T_0{}^*$ and outputting the measured values is arranged in a base 5-2 on which the module 5-1 is mounted.

In a predicted mean thermal sensitivity calculating apparatus 1', which receives the air velocity Vair, the operative temperature $T_0{}^*$, and the air temperature Ta measured by the environment measuring unit 5, an operative temperature $T_0$ is calculated by a calculating section 3' according to the following equations (5), (6), and (7):

$$T_0{}^* \cdot (b_1 + b_3 \cdot Vair^n) = T_1 \qquad (5)$$

$$T_1 + (b_2 - b_3) \cdot Vair^n \cdot Ta = T_2 \qquad (6)$$

$$T_2/(b_1 + b_2 \cdot Vair^n) = T_0 \qquad (7)$$

where $T_0{}^*$ is the operative temperature obtained by a sensor (environment measuring unit 5), and $T_0$ is the operative temperature with respect to a human being. Since a sensor is smaller than a human being, the coefficient $b_3$ becomes larger than the coefficient $b_2$ ($b_3 > b_2$). The operative temperature $T_0$ with respect to a human being is obtained after the process of calculations by equations (5), (6), and (7), thus increasing the accuracy.

The predicted mean thermal sensitivity PMV* is calculated by equation (3) on the basis of the operative temperature $T_0$ obtained by this arithmetic processing, the air temperature Ta, the relative humidity RH, a saturated water vapor pressure Pa*, the clothing thermal resistance Icℓ, a variable $h_0$ ($h_0 = b_1 + b_2 \cdot Vair^n$), and the coefficients $a_1$ to $a_6$.

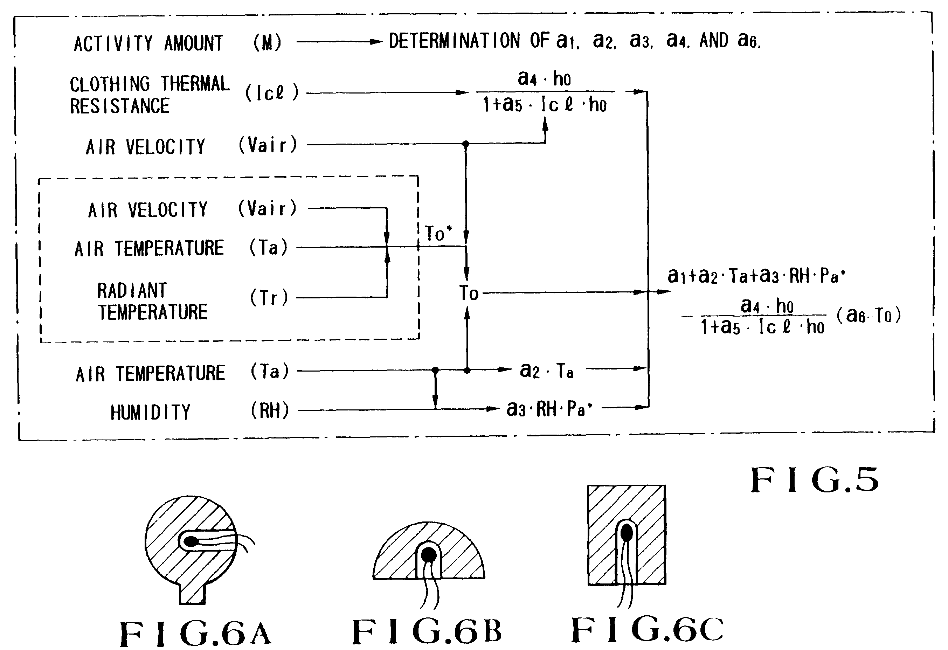

Fig. 5 shows the process of calculating the predicted mean thermal sensitivity PMV* in the predicted mean thermal sensitivity calculating apparatus 1'.

According to this embodiment, since the operative temperature $T_0{}^*$ close to the operative temperature $T_0$ is obtained by the environment measuring unit 5, arithmetic processing for the operative temperature $T_0$ is simplified, and the hardware arrangement of the calculating section 3' is simplified. In addition, the processing time is shortened, resulting in a further reduction in cost.

In the above-described embodiment, the module main body 5-11 is constituted by a cylindrical member having a bottom. However, as shown in Figs. 6(a), 6(b), and 6(c), the module main body may be constituted by a spherical member, a hemispherical member, or a columnar member. In addition, the place where the thermal sensor 5-12 for measuring the air velocity Vair is arranged is not limited to the internal space of the module main body. For example, the sensor may be arranged on the outer surface of the module main body or near the outside of the module main body.

As is apparent from the above description, according to the predicted mean thermal sensitivity calculating apparatus of first aspect of the present invention, the predicted mean thermal sensitivity PMV* can be calculated by four simple arithmetic operations without degrading the accuracy, and the processing time can be greatly shortened as compared with the conventional apparatus. In addition, since only simple arithmetic processing is required, the calculating section 3 can be constituted by simply incorporating an analog circuit mainly consisting of an operational amplifier or only one microcomputer. This promotes a reduction in cost of the apparatus and hence greatly contributes to a practical application of the apparatus as a PMV sensor for building air-conditioning.

According to the second aspect of the present invention, since the operative temperature $T_0^*$ close to the operative temperature $T_0$ is obtained by the environment measuring unit, arithmetic processing for the operative temperature $T_0$ is simplified, and the hardware arrangement of the calculating section is simplified. In addition, the processing time is shortened, resulting in a further reduction in cost.

## Claims

1. A method of calculating predicted mean thermal sensitivity, comprising the steps of:

   measuring with an environment measuring unit (5) the air temperature (Ta), the air velocity (Vair) and the operative temperature ($T_0^*$) of the unit (5);
   transforming the operative temperature ($T_0^*$) of the unit to the operative temperature ($T_0$) with respect to a human being by the following equations

$$T_0^* \cdot (b_1 + b_3 \cdot Vair^n) = T_1$$

$$T_1 + (b_2 - b_3) \cdot Vair^n \cdot Ta = T_2$$

$$T_2 / (b_1 + b_2 \cdot Vair^n) = T_0$$

   with Vair being the air velocity,
   $T_0^*$ being the measured operative temperature of the unit,
   $T_0$ being the operative temperature with respect to a human being, and
   $b_1$ to $b_3$ and n being coefficients; and
   calculating the predicted mean thermal sensitivity PMV* on the basis of the operative temperature with respect to a human being $T_0$, the air temperature Ta, a relative humidity RH, a saturated water vapour pressure Pa*, and a clothing thermal resistance Icl according to the equation

$$PMV^* = a_1 + a_2 \cdot Ta + a_3 \cdot RH \cdot Pa^* - \frac{a_4 \cdot h_0 \cdot (a_6 - T_0)}{1 + a_5 \cdot Icl \cdot h_0}$$

   with $h_0 = b_1 + b_2 \cdot Vair^n$ and $a_1$ to $a_6$ being coefficients.

2. An apparatus for calculating predicted mean thermal sensitivity, comprising:

   an environment measuring unit (5) including means (T2) for measuring the air temperature (Ta), means (5-12) for measuring air velocity (Vair) and a thermal sensor (5-13) for measuring the operative temperature ($T_0^*$) of the unit (5);
   calculating means (3') which is programmed to transform the operative temperature ($T_0^*$) of the unit to the operative temperature ($T_0$) with respect to a human being by the following equations

6

$$T_0{}^* \cdot (b_1 + b_3 \cdot Vair^n) = T_1$$

$$T_1 + (b_2 - b_3) \cdot Vair^n \cdot Ta = T_2$$

$$T_2 / (b_1 + b_2 \cdot Vair^n) = T_0$$

with Vair being the air velocity,
$T_0{}^*$ being the measured operative temperature of the unit,
$T_0$ being the operative temperature with respect to a human being, and
$b_1$ to $b_3$ and n being coefficients;
and calculating means (1') which is programmed to calculate the predicted mean thermal sensitivity PMV* on the basis of the operative temperature with respect to a human being $T_0$, the air temperature Ta, a relative humidity RH, a saturated water vapour pressure Pa*, and a clothing thermal resistance Icℓ according to the equation

$$PMV^* = a_1 + a_2 \cdot Ta + a_3 \cdot RH \cdot Pa^* - \frac{a_4 \cdot h_0 \cdot (a_6 - T_0)}{1 + a_5 \cdot Ic\ell \cdot h_0}$$

with $h_0 = b_1 + b_2 \cdot Vair^n$ and $a_1$ to $a_6$ being coefficients.

**Patentansprüche**

1. Ein Verfahren zum Berechnen der vorhergesagten mittleren Wärmeempfindlichkeit, das die Schritte aufweist:

   Messen der Lufttemperatur (Ta), der Luftgeschwindigkeit (Vair) und der wirksamen Temperatur ($T_0{}^*$) einer Umgebungsmeßeinheit (5) mit der Umgebungsmeßeinheit (5);
   Umwandeln der wirksamen Temperatur ($T_0{}^*$) der Einheit in die wirksame Temperatur ($T_0$) bezüglich eines Menschen durch die folgenden Gleichungen

$$T_0{}^* \cdot (b_1 + b_3 \cdot Vair^n) = T_1$$

$$T_1 + (b_2 - b_3) \cdot Vair^n \cdot T_a = T_2$$

$$T_2 / (b_1 + b_2 \cdot Vair^n) = T_0 \,,$$

   wobei Vair die Luftgeschwindigkeit,
   $T_0{}^*$ die gemessene, wirksame Temperatur der Einheit,
   $T_0$ die wirksame Temperatur bezüglich eines Menschen und
   $b_1$ bis $b_3$ und n Koeffizienten sind; und
   Berechnen der vorhergesagten mittleren Wärmeempfindlichkeit PMV* auf der Grundlage der wirksamen Temperatur $T_0$ bezüglich eines Menschen, der Lufttemperatur $T_a$, einer relativen Feuchtigkeit bzw. Luftfeuchtigkeit RH, eines Wasserdampf-Sättigungsdrucks Pa* und eines Bekleidungs-Wärmewiderstands Icℓ gemäß der Gleichung

$$PMV^* = a_1 + a_2 \cdot Ta + a_3 \cdot RH \cdot Pa^* - \frac{a_4 \cdot h_0 \cdot (a_6 - T_0)}{1 + a_5 \cdot Ic\ell \cdot h_0} \,,$$

   wobei $h_0 = b_1 + b_2 \cdot Vair^n$ und $a_1$ bis $a_6$ Koeffizienten sind.

**2.** Eine Vorrichtung zum Berechnen der vorhergesagten mittleren Wärmeempfindlichkeit, die aufweist:

eine Umgebungsmeßeinheit (5) mit einer Einrichtung (T2) zum Messen der Lufttemperatur (Ta), einer Einrichtung (5-12) zum Messen der Luftgeschwindigkeit (Vair) und einem Temperatursensor (5-13) zum Messen der wirksamen Temperatur ($T_0^*$) der Einheit (5);

eine Berechnungseinrichtung (3'), die zum Umwandeln der wirksamen Temperatur ($T_0^*$) der Einheit in die wirksame Temperatur ($T_0$) bezüglich eines Menschen mittels der folgenden Gleichungen programmiert ist

$$T_0^* \cdot (b_1 + b_3 \cdot Vair^n) = T_1$$

$$T_1 + (b_2 - b_3) \cdot Vair^n \cdot T_a = T_2$$

$$T_2 / (b_1 + b_2 \cdot Vair^n) = T_0 \,,$$

wobei Vair die Luftgeschwindigkeit,
$T_0^*$ die gemessene, wirksame Temperatur der Einheit,
$T_0$ die wirksame Temperatur bezüglich eines Menschen und
$b_1$ bis $b_3$ und n Koeffizienten sind; und
eine Berechnungseinrichtung (1'), die zum Berechnen der vorhergesagten mittleren Wärmeempfindlichkeit PMV* auf der Grundlage der wirksamen Temperatur $T_0$ bezüglich eines Menschen, der Lufttemperatur Ta, einer relativen Feuchtigkeit bzw. Luftfeuchtigkeit RH, eines Wasserdampf-Sättigungsdrucks Pa* und eines Bekleidungs-Wärmewiderstands Icℓ programmiert ist gemäß der Gleichung

$$PMV^* = a_1 + a_2 \cdot Ta + a_3 \cdot RH \cdot Pa^* - \frac{a_4 \cdot h_0 \cdot (a_6 - T_0)}{1 + a_5 \cdot Ic\ell \cdot h_0} \,,$$

wobei $h_0 = b_1 + b_2 \cdot Vair^n$ und $a_1$ bis $a_6$ Koeffizienten sind.

**Revendications**

**1.** Procédé de calcul de la sensibilité thermique moyenne prédite, comprenant les étapes consistant à :

mesurer au moyen d'une unité de mesure d'environnement (5) la température de l'air (Ta), la vitesse de l'air (Vair) et la température opératoire de fonctionnement ($T_0^*$) de l'unité (5) ;
transformer la température opératoire ($T_0^*$) de l'unité en la température opératoire ($T_0$) par rapport à un être humain au moyen des équations suivantes :

$$T_0^* \cdot (b_1 + b_3 \cdot Vair^n) = T_1$$

$$T_1 + (b_2 - b_3) \cdot Vair^n \cdot Ta = T_2$$

$$T_2 / (b_1 + b_2 \cdot Vair^n) = T_0$$

dans lesquelles équations :
Vair est la vitesse de l'air,
$T_0^*$ est la température opératoire mesurée de l'unité,
$T_0$ est la température opératoire par rapport à un être humain, et
$b_1$ à $b_3$ et n sont des coefficients, et
calculer la sensibilité thermique moyenne prédite PMV* sur la base de la température opératoire par rapport à un être humain $T_0$, de la température de l'air Ta, d'une humidité relative RH, d'une pression saturée de vapeur d'eau Pa*, et d'une résistance thermique de vêtements $Ic\ell$ conformément à l'équation :

$$PMV^* = a_1 + a_2 . Ta + a_3 . RH . Pa^* - \frac{a_4 . h_0 . (a_6 - T_0)}{1 + a_5 . Ic\ell . h_0}$$

avec $h_0 = b_1 + b_2 . Vair^n$ et $a_1$ à $a_6$ étant des coefficients.

2. Appareil pour le calcul de la sensibilité thermique moyenne prédite, comprenant :

une unité de mesure d'environnement (5) comprenant des moyens (T2) pour mesurer la température de l'air (Ta), des moyens (5-12) pour mesurer la vitesse de l'air (Vair) et un détecteur thermique (5-13) pour mesurer la température opératoire ($T_0^*$) de l'unité (5) ;
des moyens de calcul (3') qui sont programmés de façon à transformer la température opératoire ($T_0^*$) de l'unité en la température opératoire ($T_0$) par rapport à un être humain au moyen des équations suivantes :

$$T_0^* . (b_1 + b_3 . Vair^n) = T_1$$

$$T_1 + (b_2 - b_3) . Vair^n . Ta = T_2$$

$$T_2 / (b_1 + b_2 . Vair^n) = T_0$$

dans lesquelles équations :
Vair est la vitesse de l'air,
$T_0^*$ est la température opératoire mesurée de l'unité,
$T_0$ est la température opératoire par rapport à un être humain, et
$b_1$ à $b_3$ et n sont des coefficients ;
et des moyens de calcul (1') qui sont programmés de façon à calculer la sensibilité thermique moyenne prédite PMV* sur la base de la température opératoire par rapport à un être humain $T_0$, de la température de l'air Ta, d'une humidité relative RH, de la pression saturée de vapeur d'eau Pa*, et d'une résistance thermique de vêtement $Ic\ell$ conformément à l'équation :

$$PMV^* = a1 + a2 . Ta + a3 . RH . Pa^* - \frac{a_4 . h_0 . (a_6 - T_0)}{1 + a_5 . Ic\ell . h_0}$$

avec $h_0 = b_1 + b_2 . Vair^n$ et $a_1$ à $a_6$ sont des coefficients.

FIG.1A

FIG.1B

FIG.2A    FIG.2B

FIG.3

FIG.4A    FIG.4B

DETERMINATION OF $a_1$, $a_2$, $a_3$, $a_4$, AND $a_6$.

ACTIVITY AMOUNT (M)

CLOTHING THERMAL RESISTANCE (Icl)

AIR VELOCITY (Vair)

$\dfrac{a_4 \cdot h_0}{1 + a_5 \cdot Icl \cdot h_0}$

AIR VELOCITY (Vair)

AIR TEMPERATURE (Ta)

RADIANT TEMPERATURE (Tr)

$T_0^*$

$T_0$

AIR TEMPERATURE (Ta)

$a_2 \cdot Ta$

HUMIDITY (RH)

$a_3 \cdot RH \cdot Pa^*$

$a_1 + a_2 \cdot Ta + a_3 \cdot RH \cdot Pa^* + \dfrac{a_4 \cdot h_0}{1 + a_5 \cdot Icl \cdot h_0} (a_6 - T_0)$

FIG.5

FIG.6A

FIG.6B

FIG.6C